# EUROPEAN PATENT SPECIFICATION

(11) **EP 2 153 731 B1**
(45) Date of publication and mention of the grant of the patent: **04.05.2016**
(21) Application number: 08752642.2
(22) Date of filing: 13.05.2008
(51) Int. Cl.: A23J 3/16, A23J 3/34, A23L 2/38

(54) **METHOD OF PRODUCING SOYBEAN PROTEIN MATERIAL**
VERFAHREN ZUR HERSTELLUNG VON SOJABOHNENPROTEINSUBSTANZ
PROCÉDÉ DE PRODUCTION D'UN MATÉRIAU DE TYPE PROTÉINE DE SOJA

(30) Priority: 24.05.2007 JP 2007137327
(43) Date of publication of application: 17.02.2010
(73) Proprietor: Fuji Oil Holdings Inc., Osaka 598-8540 (JP)
(72) Inventor: KATO, Hiroyuki, Izumisano-shi Osaka 598-8540 (JP); SAKATA, Tetsuo, Izumisano-shi Osaka 598-8540 (JP)
(74) Representative: Boult Wade Tennant
(86) International application number: PCT/JP2008/058762
(87) International publication number: WO 2008/143057

(56) References cited:
- WO-A1-2006/080426
- JP-A- 06 113 749
- JP-A- 08 154 593
- JP-A- 60 176 549
- JP-A- 2007 319 046

## Description

### Technical Field

The present invention relates to a method of producing a powdery soybean protein material which is highly dispersible in hot water at 80°C or more and showing regulated coarseness.

### Background Art

In recent years, consciousness of general consumers for health has increased, and interests toward nutritional components and physiological effects of soybean protein have been enhanced. A large amount of foods and beverages that make it possible to effectively take soybean protein intended for protein support, an anti-cholesterol effect, and a fat burning effect have been developed. A powdery beverage such as, what is called a protein powder, containing a powdery soybean protein material is one of the foods and beverages. Such a powdery beverage is required to be easily dissolved for home use, not to have coarseness, and to be smooth texture in the throat with low viscosity.

However, even when a powder of a soybean protein material is tried to be dissolved in water or hot water, an outer surface of a powder particle is hydrated to form a gel-form coating film, which inhibits permeation of water into the inside of the particle to result in forming an unmixed-in lump of the powder, and thus, dispersibility is poor. Additionally, an unmixed-in lump of a soybean protein material is generally more easily generated in hot water more than in cold water. Such an unmixed-in lump of powder is hard and scarcely soluble, and thus it is substantially difficult to be dissolved even when stirred for home use. A soybean protein material can be improved in dispersibility by decreasing its miscibility with water. However, an aqueous solution of a soybean protein material with decreased miscibility with water is not preferable since insoluble protein particles may be precipitated and coarseness due to the particles may be felt in drinking. That is, development of powdery beverages containing soybean protein is required to be improved in dispersibility without decreasing water solubility of a soybean protein material. Prior arts intended for improvement in dispersibility of a soybean protein material will be shown below.

Patent document 1 (JP 9-313112 A), discloses a powdery soybean protein obtained by thermally denaturing an isolated soybean protein to adjust NSI to 50 to 80, followed by attaching a polyglycerin fatty acid ester thereto. However, this powdery soybean protein is not a hydrolyzed product. In addition, this powdery soybean protein is suitable for thick drinks such as soup allowed to be high viscosity because it has a property of coagulation by heating, but is not suitable for sports drink, and the like, which are required to have smooth texture in the throat.

Patent document 2 (JP 2000-102352 A) relates to a production method of powdery soybean protein used for a pickling solution obtained by adding a fat and oil, and an emulsifier to a soybean protein powder. After a step of forming a powder, a small amount of the fat and oil and, as necessity, a trace amount of the emulsifier are added thereto. However, lecithin used herein as the emulsifier scarcely has an improvement effect of dispersibility in hot water. Furthermore, a product obtained by the method has a gel-forming property necessary for a pickling solution and it has dispersibility in water; however, dispersibility in hot water is insufficient, and also, due to high viscosity, the product cannot be prepared into beverages having smooth texture in the throat.

Patent document 3 (JP 6-113749 A) relates to a production method of powdery soybean protein characterized by spraying a water-containing liquid containing a surfactant when a fluidized layer treatment of raw material soybean protein powder is carried out. The patent document describes that, in the case of use for a drink, NSI of the raw material soybean protein is decreased to approximately 75 or less by high heating or subjected to a protease treatment to reduce the viscosity of the water dispersible solution, and thus, the powdery soybean protein can be easily drunk. However, only by reducing the NSI with heating, protein molecules are associated to enlarge particles and coarseness is likely to severely appear. Only by the protease treatment makes a poor taste. The patent document has no description about selecting a surfactant having an HLB value within a specific range or an appropriate aspect of the protease treatment in order to avoid such problems.

Patent document 4 (JP 08-154593 A) describes a production method of a soybean protein material in which soybean protein is hydrolyzed with protease to attain a hydrolysis ratio of 5 to 20 and, before or after the hydrolysis, 5 to 50% by weight of a fat and oil was emulsified with respect to the soybean protein and dried. However, the patent document describes that an aspect of enzyme decomposition and also hydrophilicity and a lipophilic property of an emulsifier are not limited, and does not teach carrying out hydrolysis with an enzyme mainly having endoprotease activity and adding an emulsifier having an HLB value within a specific range. It is necessary to remain a gel-forming property in order to use for a pickling solution, and therefore, it has too high viscosity in use of beverages required to have coolness feeling even though the soybean protein material can be used for thick drinks such as a soup. Furthermore, protein content is decreased since a fat and oil is contained as an essential component, and therefore, processing adequacy for foods intended for taking soybean protein such as a protein powder becomes poor.

Patent document 5 (WO 2006/080426) discloses a production method of soybean protein that is excellent in dispersibility and that has preferable smooth texture in the throat without coarseness, when used in a beverage. However, this document studies in an object of improvement in dispersibility in water, and dispersibility in hot water is not a subject of the invention described in this document, different from the invention of the present application. A step of adding Mg compound and a step of hydrolysis are essential, and addition of an emulsifier for dispersibility improvement is preferable. An emulsifier having an HLB value of 4 to 10 is used based on the finding that when the HLB value of the emulsifier is high, wettability with water of soybean protein becomes too high and, adversely, lumps are likely to be generated. However, this document does not describe that, even when the same emulsifier is used in soybean protein, a dispersibility improvement effect is different between cold water and hot water, and it is necessary to select an emulsifier having an HLB value within a specific range in order to improve dispersibility in hot water.

Patent document 6 (JP 2007-319046 A) discloses a method of producing a soybean protein material with good flavour and dispersibility in water at ambient temperature which comprises the steps of (a) adding a calcium compound, (b) hydrolysing the protein by adding a protease, and (c) heating the mixture at a high temperature for a short time.

Patent document 7 (JP 60-176549 A) discloses a method of producing hydrolysed products of soybean, the first with improved foaming properties and the second with improved emulsification properties, which comprises the steps of (a) partially hydrolysing soybean protein with a protease to obtain a solution containing two parts of hydrolysed products having different solubilities in 5% trichloroacetic acid solution, and (b) separating the two parts from each other with an ultrafiltration membrane.

As described above, although there have been soybean protein materials improved in dispersibility in cold water or ordinary temperature water, a soybean protein material that is easily dissolved in hot water, shows controlled coarseness and gives a beverage having low viscosity and smooth texture in the throat has not been obtained.
Patent document 1: JP 09-313112 A
Patent document 2: JP 2000-102352 A
Patent document 3: JP 06-113749 A
Patent document 4: JP 08-154593 A
Patent document 5: WO 2006/080426
Patent document 6: JP 2007-319046 A
Patent document 7: JP 60-176549 A

### Disclosure of the Invention

### Problem to be Solved by the Invention

An object of the present invention is to obtain a soybean protein material that is highly dispersible in hot water at 80°C or more, shows no coarseness, and can be prepared into a beverage having low viscosity and smooth texture in the throat.

### Means for Solving the Problem

The present inventors have found that the resultant product obtained by carrying out all of the procedures, hydrolysis in specific conditions, adding an emulsifier having an HLB value within a specific range and high heating in an aqueous system, followed by drying, to the soybean protein, is easily dissolved in hot water and can be processed into a beverage having low viscosity and smooth texture in the throat. And thus, the present invention has been finally completed.

That is, the present invention is:
1. A method of producing a soybean protein material, comprising: a step of hydrolyzing soybean protein with a protease in an aqueous system until the 0.22 M TCA solubility attains 15 to 30%; a step of adding an emulsifier having an HLB value from 6 or more to 13 or less; a step of drying the soybean protein after the hydrolysis; and a step of heating the soybean protein in an aqueous system at 105 to 180°C for 15 to 180 seconds before the drying, wherein the soybean protein is hydrolyzed so that free amino acid content is less than 0.1% by weight per solid content of the soybean protein material.
2. The method of producing a soybean protein material according to claim 1, wherein the emulsifier is one or more selected from the group consisting of sugar ester, a sorbitan fatty acid ester, polyglycerin ester, and organic acid monoglyceride.
3. The method of producing a soybean protein material according to claim 1, wherein one or more selected from the group consisting of magnesium salt, magnesium hydroxide, magnesium oxide, calcium salt, calcium hydroxide, and calcium oxide are further added to the soybean protein.

### Effect of the Invention

The present invention makes it possible to provide a soybean protein material that is easily dispersed in hot water without coarseness, and can prepare a beverage preferable in smooth texture in the throat due to low viscosity.

### Best Mode for Carrying out the Invention

The soybean protein material of the present invention is obtained by a production method including a step of hydrolyzing soybean protein with a protease in an aqueous system until the 0.22 M TCA solubility attains 15 to 30%, a step of adding an emulsifier having an HLB value from 6 or more to 13 or less, a step of drying the soybean protein after the hydrolysis, and a step of heating the soybean protein in an aqueous system at 105 to 180°C for 15 to 180 seconds before the drying. Each step will be specifically described below.

Examples of soybean protein in the present invention include defatted soybean milk, isolated soybean protein, and the like. The step of hydrolyzing such a soybean protein with a protease in an aqueous system is carried out so that the 0.22 M TCA solubility of a soybean protein material is within the range from 15 to 30%. When the 0.22 M TCA solubility is less than 15%, it is not preferable for a beverage not only because dispersibility of obtained soybean protein material is insufficient, but also because viscosity of an aqueous solution of the soybean protein material becomes high. On the other hand, when the 0.22 M TCA solubility is more than 30%, it is not appropriate since bitter taste is generated or bubbles are easily caused by mixing at the time of dissolution. Herein, the 0.22 M TCA solubility means that a ratio of 0.22 M trichloroacetic acid (TCA) soluble protein to the whole protein is measured in a protein determination method by the Kjeldahl method and is used as a measure of a hydrolysis ratio.

A protease in the present invention preferably mainly has endoprotease activity, in other words, preferably has low exoprotease activity. The exoprotease activity of the protease in the present invention is expressed by using the generated amount of the free amino acid as an index when the protease is acted. In particular, it is expressed by a content of free amino acid per a solid content of a soybean protein material when the protease is acted so that the 0.22 M TCA solubility attains 15 to 30%. The content is preferably 0.2% by weight or less, and more preferably 0.1% by weight or less. When the free amino acid content of soybean protein material is within the range, the soybean protein material is easily processed into not only a beverage characterized by salty taste or umami taste but also a beverage with a flavor such as fruits or vanilla.

As the protease used in the present invention, any of proteases can be used such as plant-derived proteases (such as papain, bromelain, and ficin), animal-derived proteases (such as pepsin, trypsin, and chymotrypsin), microorganism-derived proteases (such as Protin: Daiwa Kasei Co., Ltd., Alcalase: Novo Industry, Ltd., and Thermoase: Daiwa kasei Co., Ltd.), acidic proteases, neutral proteases and alkaline proteases. An aspect of enzymatic degradation is not particularly limited, and an optimal acting temperature range and an optimal acting pH range of a protease to be used can be adopted. However, since a pH of 4 to 6 sometimes causes insolubility of protein, an enzymatic reaction is preferably carried out with keeping the pH in a range except for this range.

The production method of soybean protein material of the present invention includes a step of adding an emulsifier having an HLB value from 6 or more to 13 or less to soybean protein. The emulsifier has an HLB value from 6 or more to 13 or less. Using the emulsifier having an HLB value in this range makes it possible to improve a soybean protein material in dispersibility in hot water at 80°C or more. Although a dispersibility improvement effect is also affected by a kind of an emulsifier, a tendency to enhance the effect is shown by selecting a comparatively high HLB value. Although a specific numerical value is different depending on a kind of an emulsifier, an emulsifier having an HLB value of approximately 7 to 11 is preferable since an improvement effect of dispersibility in hot water is excellent. For example, in the case of a sugar ester, one having an HLB value of 9 is excellent in the effect. A soybean protein material to which an emulsifier having an HLB value of less than 6 is added has good dispersibility in water, but dispersibility in hot water is poor. An unmixed-in lump of powder is generated by hydrating a surface of a powder particle and forming a gel-formed coating film. A powder particle of soybean protein is more easily form an unmixed-in lump of powder in hot water than in water, and one factor thereof is inferred that miscibility with water of the powder particle surface is likely to be promoted. Therefore, it was unexpected that using an emulsifier having high wettability to water, that is, an emulsifier having a comparatively high HLB value makes it possible to improve a soybean protein material in dispersibility in hot water.

Examples of appropriately usable emulsifiers include sugar esters, sorbitan fatty acid esters (such as sorbitan monolaurate), polyglycerin fatty acid esters (such as diglycerin monostearate and diglycerin monooleate), and organic acid monoglycerides (such as diacetyl tartaric acid monoglyceride).

Addition of an emulsifier may be carried out before or after the step of drying soybean protein. When the emulsifier is added before the step of drying soybean protein, timing of the addition is not particularly limited, and the emulsifier may be added before or after, or in the middle of hydrolysis. Alternatively, the addition may be carried out before or after the step of heating. In this case, it is preferable that the emulsifier is contained in an amount of preferably 0.2 to 5% by weight, more preferably 0.3 to 1.5% by weight, per a solid content of a soybean protein material. When the adding amount is too small, a dispersibility improvement effect due to the emulsifier becomes weak, and when it is too large, a protein content of a soybean protein material decreases, and a distinctive bad flavor of an emulsifier is given.

When an emulsifier is added after once drying soybean protein, the emulsifier is sprayed and dried again. In this case, a spraying method of the emulsifier, a kind of device to be used, and a drying method after spraying are also not particularly limited. For example, there is a method in which while a dried powder of a soybean protein hydrolyzed product is fluidized with wind pressure in a fluidized bed of closed system, a vehicle liquid dissolved with an emulsifier is sprayed in the form of mist to said powder and attached thereto, and simultaneously, drying of the powder is carried out by heating in the fluidized bed, such as fluidized bed drier (for example, a flow coater). The vehicle liquid is referred to a solution for spraying and attaching to the powder, and is also called a binder liquid or a binding liquid. In this case, an emulsifier is contained in an amount of preferably 0.05 to 2% by weight, more preferably 0.1 to 1% by weight per a solid content of a soybean protein material. Adding the emulsifier after drying soybean protein can result in a less adding amount of the emulsifier.

The soybean protein material of the present invention is further improved in miscibility with water and dispersibility in hot water by being heated in an aqueous system before drying. Heating is carried out at 105 to 180°C, preferably at 130 to 160°C, for 15 to 180 seconds, preferably for 30 to 60 seconds. Industrially, a high temperature instant heating sterilizer, for example, a continuous direct heating sterilizer in a steam injection system can be used. If heating is insufficient, a gel-forming property is remained and dispersibility deteriorates. When heating is too strong, miscibility with water is reduced and coarseness in drinking is generated. Timing of this heating is not specified as long as it is before drying the soybean protein material. For example, the heating may be carried out twice before and after hydrolysis.

A viscosity of the soybean protein material thus obtained is 200 mPa·s or less, preferably 100 mPa·s or less when the viscosity is measured at 20°C after heating a 12 wt%-solution at 80°C for 30 minutes by a Brookfield viscometer. When a nitrogen solubility index (hereinafter referred to as NSI, a measurement method is described later) is used as a measure of miscibility with water, the NSI of the soybean protein material of the present invention is at least 60 or more, and approximately 70 or more, and when the NSI is 60 or more, for example, even the soybean protein material dissolved in hot water so as to have a high concentration such as 8% has less coarseness and preferable in smooth texture in the throat.

The soybean protein material of the present invention can be further improved in dispersibility by adding one or more of the group consisting of a magnesium salt, magnesium hydroxide, magnesium oxide, calcium salt, calcium hydroxide, and calcium oxide. An adding amount thereof is 60 mmol or less, preferably 10 to 40 mmol, as calcium or magnesium based on 1000 g of the soybean protein material. These can be added to a solution in any timing before the drying step. Many of these substances are generally alkaline, and thus, are preferably added as an alkaline agent in a step necessary to adjust a pH during production of the soybean protein material. When an amount of these substances is too large, coarseness may occur or insolubility of the soybean protein material may be caused.

Since the soybean protein material is excellent in nutritional adequacy when its protein content is larger in the case of being used as a raw material for a protein beverage, the protein content is desirably 90% or more. Therefore, although the soybean protein material of the present invention may contain a fat and oil, and the like, it is preferable that a content of a fat and oil is lower than 5% by weight per solid content of the soybean protein material because it does not reduce a protein content and can be prepared into a fat-free beverage.

The measurement methods used in the present invention will be then described.

### (Free amino acid content) (Hereinafter abbreviated as FAA.)

To a sample, 100-hold amount of 3% sulfosalicylic acid solution was added, the low molecular fraction was dissolved, and the centrifuged supernatant was then measured by an amino acid analyzer (L-8500, Hitachi High-Technologies Corporation). A value obtained by dividing a total weight of asparagine, threonine, serine, glutamine, glutamic acid, glycine, alanine, valine, cysteine, methionine, isoleucine, leucine, tyrosine, phenylalanine, lysine, histidine, arginine and proline by the weight of the sample was expressed by percentage.

### (NSI)

1 g of sample was weighed, and 100 ml of ion exchange water was added. The mixture was carried out propeller stirring (500 rpm) for 10 minutes, and nitrogen in the filtrate solution filtrated with No. 5A filter paper (measurement in the Kjeldahl method) was expressed by a percentage to the whole nitrogen in the sample.

### (Dispersibility)

To a cup containing 11 g of sample, 100 g of hot water at 80°C was poured, and the mixture was stirred with a spatula for 30 seconds three times per second and strained with a tea strainer (100 meshes) to measure a weight of an unmixed-in lump of the sample remained in the tea strainer.

Measurements were performed three times and the average was adopted. A sample having a weight of an unmixed-in lump (in wet state) of 3 g or less was evaluated as good (⊙), a sample having a weight of an unmixed-in lump of more than 3 and 5 or less was evaluated as acceptable (○), and a sample having a weight of an unmixed-in lump of more than 5g was evaluated as unacceptable (×).

### (Viscosity)

A solution containing 12% by weight of soybean protein material was heated at 80°C for 30 minutes to measure a viscosity at 20°C by a Brookfield viscometer (manufactured by TOKIMEC, Inc.).

### (Coarseness)

A 6% aqueous solution was prepared using a commercially available mixer, and presence or absence of coarseness was sensorially evaluated by 4 people. The evaluation was expressed by three levels of "strongly felt" for a sample in which coarseness was strongly felt, "slightly felt" for a sample in which coarseness is felt a little, and "none" for a sample in which no coarseness is felt.

### (Flavor)

Using a commercially available juicer, 6% of soybean protein materials obtained in examples and comparative examples, 0.004% of a vanilla flavor (made by Nihon Siber Hegner K.K.), 0.4% of dextrin (TK-16: made by Matsutani Chemical Industry Co., Ltd.), 2% of a fat and oil powder (Ema-fat PA: made by Riken Vitamin Co., Ltd.), and 4% of fructose were mixed to prepare samples. Whether vanilla flavors can be clearly felt or not was evaluated in these samples by 4 people.

### Examples

Hereinafter, embodiments of the present invention will be described in particular by examples. However, the technical scope of the present invention is not limited to these examples.

### (Example 1)

To 1000 parts by weight of water, 100 parts by weight of low-denatured defatted soybean was added to be extracted at 40°C for 30 minutes with stirring with a Homomixer (manufactured by Tokushu Kika Kogyo Co., Ltd.), the resultant was centrifuged at 3000xg to remove the bean curd refuse, and defatted soybean milk was thus obtained. The defatted soybean milk was adjusted to pH 4.5 with hydrochloric acid to be isoelectrically precipitated and was centrifuged to give an acid-precipitated curd. Thereto was added 4-fold amount of water, the mixture was neutralized with sodium hydroxide to obtain a solution containing isolated soybean protein, and the solution was heated at 150°C × 40 seconds by a continuous direct heating type sterilizer (hereinafter referred to as VTIS) (manufactured by Alfa Laval, Co.). Thereto was added an alkali protease ("Protin A", made by Amano Pharmaceutical Co., Ltd.), which is mainly has endoprotease activity, in an amount of 0.1% by weight per a solid content and hydrolysis was carried out at 50°C and pH 7.0 for 1 hour, and the hydrolyzed product was then heated at 140°C × 6 seconds by VTIS. Thereto was added diacetyl tartaric acid monostearate (Poem W-10, made by Riken Vitamin Co., Ltd., HLB value of 9.5) so as to be 1.0% by weight per a solid content, and spray drying was carried out with a spray drier (manufactured by Ohkawara Kakohki Co., Ltd.) to obtain a powdery soybean protein material.

### (Example 2)

A soybean protein material was obtained in the same manner as Example 1, except that 20 mmol of calcium hydroxide was added per 1000 g of solid content after adding water to an acid-precipitated curd, and then the mixture was neutralized with sodium hydroxide.

### (Comparative Example 1)

A soybean protein material was obtained in the same manner as Example 1, except that an adding amount of Protin A was reduced to 0.03%.

### (Example 3)

A soybean protein material was obtained in the same manner as Example 1, except that heating was not carried out before hydrolysis but heating after hydrolysis was carried out at 150°C for 60 seconds.

### (Comparative Example 2)

A soybean protein material was obtained in the same manner as Example 1, except that a condition of heating before hydrolysis was changed to 150°C × 5 seconds.

TCA solubility, FAAs, NSIs, dispersibility in hot water at 80°C, dispersibility in water at 20°C, 12% solution viscosities, and evaluations of coarseness and flavors of Examples 1 to 3 and Comparative Examples 1 and 2 were summarized in Table 1. The soybean protein materials in Examples 1, 2 and 3 had preferable dispersibility in hot water and low viscosities. Evaluations of flavors and coarseness were also preferable. The soybean protein material of Example 2 in which calcium hydroxide was added was preferable one in which dispersibility was further improved as compared to that of Example 1 and formation of an unmixed-in lump of powder was suppressed. The soybean protein material of Comparative Example 1 was insufficiently hydrolyzed and thus had poor dispersibility and a viscosity thereof was high. In the heating condition in Comparative Example 2, the obtained soybean protein material had poor dispersibility and high viscosity as expected.

**[Table 1]**

| | Ca(OH)2 | First heating | Second heating | Emulsifier HLB | TCA solubility/% | FAA | NSI | Unmixed-in lump at 80°C/g | Dispersibility at 80°C | Unmixed-in lump at 20°C/g | Dispersibility at 20°C | Viscosity/mPa·s | Coarseness | Flavor |
|---|---|---|---|---|---|---|---|---|---|---|---|---|---|---|
| Example 1 | None | 150°C×40 sec. | 140°Cx6 sec. | | 22.1 | 0.02 | 77 .5 | 2.8 | ⊙ | 4.8 | ○ | 32 | None | Good |
| Example 2 | Added | t | t | Diacetyl tartaric acid monostearate (HLB 9.5) | 23.4 | 0.02 | 75.1 | 2.0 | ⊙ | 3.5 | ○ | 28 | None | Good |
| Comparative Example 1 | None | ↑ | t | | 10.1 | 0.03 | 76.5 | 14.1 | × | 15.8 | × | 3500 | None | Good |
| Example 3 | None | - | 150°C×60 sec. | | 22.4 | 0.03 | 81.5 | 4.9 | ○ | 8.9 | × | 80 | None | Good |
| Comparative Example 2 | None | 150°Cx5 sec. | 140°C×6 sec. | | 22.9 | 0.03 | 75.1 | 8.2 | × | 10.1 | × | 520 | None | Good |

### (Example 4)

To 1000 parts by weight of water, 100 parts by weight of low-denatured defatted soybean was added to be extracted at 40°C for 30 minutes, the resultant was centrifuged at 3000xg to remove the bean curd refuse, and defatted soybean milk was thus obtained. The defatted soybean milk was adjusted to pH 4.5 with hydrochloric acid to be isoelectrically precipitated and was centrifuged to give an acid-precipitated curd. Thereto was added 4-hold amount of water, the mixture was neutralized with sodium hydroxide to obtain a solution containing isolated soybean protein, and the solution was heated at 150°C × 40 seconds by VTIS (manufactured by Alfa Laval, Co.). Thereto was added an alkali protease ("Protex 6L" made by Genencor Kyowa Co., Ltd.), which mainly has endoprotease activity, in an amount of 0.08% by weight per solid content and hydrolysis was carried out at 50°C and pH 7.0 for 1 hour, and the hydrolyzed product was then heated at 140°C × 6 seconds by VTIS again. The resultant was spray dried with a spray drier (manufactured by Ohkawara Kakohki Co., Ltd.) to obtain a powder.

Then, a sugar ester (F-70, made by Dai-ichi Kogyo Seiyaku Co., Ltd., HLB value of 7) was mixed with stirring in a hot water at 70°C, using a Homomixer to prepare a 4% vehicle liquid. Then, in a flow coater (manufactured by Ohkawara Kakohki Co., Ltd.), which is a fluidized bed drier, the vehicle liquid was sprayed and attached at 12.5% per the above obtained powder with fluidizing the powder by wind pressure, and the powder was heated and dried to thus obtain a soybean protein material.

### (Example 5)

A soybean protein material was prepared in the same manner as Example 4, except that a sugar ester (F-110, made by Dai-ichi Kogyo Seiyaku Co., Ltd., HLB value of 11) was added to the powder obtained in Example 4 in place of the sugar ester (F-70).

### (Example 6)

A soybean protein material was prepared in the same manner as Example 4, except that sorbitan monolaurate (Emazol L10, made by Kao Corporation, HLB value of 6.5) was added to the powder obtained in Example 4 in place of the sugar ester (F-70).

### (Comparative Example 3)

A soybean protein material was prepared in the same manner as Example 4, except that a sugar ester (F-50, made by Dai-ichi Kogyo Seiyaku Co., Ltd., HLB value of 5) was added to the powder obtained in Example 4 in place of the sugar ester (F-70).

### (Example 7)

A soybean protein material was prepared in the same manner as Example 4, except that diglycerin monooleate (Poem DO-100V, made by Riken Vitamin Co., Ltd., HLB value of 8.0) was added to the powder obtained in Example 4 in place of the sugar ester (F-70).

### (Example 8)

A soybean protein material was prepared in the same manner as Example 4, except that diacetyl tartaric acid monoglyceride (Poem W-10, made by Riken Vitamin Co., Ltd., HLB value of 9.5) was added to the powder obtained in Example 4 in place of the sugar ester (F-70).

### (Example 9)

A soybean protein material was prepared in the same manner as Example 4, except that diglycerin monostearate (DS-100A, made by Riken Vitamin Co., Ltd., HLB value of 8.0) was added to the powder obtained in Example 4 in place of the sugar ester (F-70).

### (Comparative Example 4)

A soybean protein material was prepared in the same manner as Example 4, except that a sugar ester (F-20, made by Dai-ichi Kogyo Seiyaku Co., Ltd., HLB value of 2) was added to the powder obtained in Example 4 in place of the sugar ester (F-70).

### (Comparative Example 5)

A soybean protein material was prepared in the same manner as Example 4, except that a sugar ester (F-150, made by Dai-ichi Kogyo Seiyaku Co., Ltd., HLB value of 15) was added to the powder obtained in Example 4 in place of the sugar ester (F-70).

### (Comparative Example 6)

An emulsifier was not added to the powder obtained in Example 4 and the powder was directly evaluated.

TCA solubility, FAAs, NSIs, dispersibility in hot water at 80°C, dispersibility in water at 20°C, 12% solution viscosities, and evaluations of coarseness and flavors of Examples 4 to 9 and Comparative Examples 3 to 6 were summarized in Table 2. In any of examples and comparative examples, beverages preferable in smooth texture in the throat with low viscosities and preferable with respect to coarseness and flavors can be prepared; however, soybean protein materials in Comparative Examples 3 to 6 were poor in dispersibility in hot water at 80°C. As a tendency, soybean protein materials to which an emulsifier having HLB value as low as 2 to 5 were preferably dispersed in water but poorly dispersed in hot water. On the contrary, when an emulsifier having a comparatively high HLB value of 7 to 11 was used, a tendency such as poor dispersibility in water but good dispersibility in hot water was shown.

**[Table 2]**

| | First heating | Second heating | Emulsifier HLB | TCA solubility/% | FAA | NSI | Unmixedin lump at 80°C/g | Dispersibility at 80°C | Unmixed-in lump at 20°C/g | Dispersibility at 20°C | Viscosity/mPa·s | coarseness | Flavor |
|---|---|---|---|---|---|---|---|---|---|---|---|---|---|
| Example 4 | | | Sugar ester (7) | | | | 2.9 | ⊙ | 2.7 | ⊙ | 32 | None | Good |
| Example 5 | | | Sugar ester (11) | | | | 2.2 | ⊙ | 3.8 | ○ | 31 | None | Good |
| Example 6 | | | Sorbitan monolaurate (6.5) | | | | 4.0 | ○ | 2.6 | ⊙ | 42 | None | Good |
| Example 7 | | | Diglycerin monooleate (8.0) | | | | 2.2 | ⊙ | 2.0 | ⊙ | 35 | None | Good |
| Example 8 | 150°Cx40 sec. | 140°Cx6 sec. | Diacetyl tartaric acid monoglyceride (9.5) | 22.1 | 0.02 | 8.0 | 2.5 | ⊙ | 4.8 | ○ | 38 | None | Good |
| Example 9 | | | Diglycerin monostearate (8.0) | | | | 2.6 | ⊙ | 4.1 | ○ | 30 | None | Good |
| Comparative Example 3 | | | Sugar ester (5) | | | | 7.5 | × | 4.5 | ○ | 28 | None | Good |
| Comparative Example 4 | | | Sugar ester (2) | | | | 8.9 | × | 2.9 | ⊙ | 29 | None | Good |
| Comparative Example 5 | | | Sugar ester (15) | | | | 5.9 | × | 9.8 | × | 32 | None | Good |
| Comparative Example 6 | | | None | | | | 8.5 | × | 8.2 | × | 31 | None | Good |

## Claims

1. A method of producing a soybean protein material, comprising: a step of hydrolyzing soybean protein with a protease in an aqueous system until the 0.22 M Trichloroacetic acid (TCA) solubility attains 15 to 30%; a step of adding an emulsifier having an HLB value from 6 or more to 13 or less; a step of drying the soybean protein after the hydrolysis, and a step of heating the soybean protein in an aqueous system at 105 to 180°C for 15 to 180 seconds before the drying, wherein the soybean protein is hydrolyzed so that free amino acid content is less than 0.1% by weight per solid content of the soybean protein material.

2. The method of producing a soybean protein material according to claim 1, wherein the emulsifier is one or more selected from the group consisting of sugar ester, a sorbitan fatty acid ester, polyglycerin ester, and organic acid monoglyceride.

3. The method of producing a soybean protein material according to claim 1, wherein one or more selected from the group consisting of magnesium salt, magnesium hydroxide, magnesium oxide, calcium salt, calcium hydroxide, and calcium oxide are further added to the soybean protein.

## Patentansprüche

1. Verfahren zur Herstellung eines Sojabohnenproteinmaterials, umfassend: einen Schritt, in dem Sojabohnenprotein mit einer Protease in einem wässrigen System hydrolysiert wird, bis die 0,22 M Trichloressigsäure (TCA)-Löslichkeit 15 bis 30 % erreicht; einen Schritt, in dem ein Emulgator mit einem HLB-Wert von 6 oder mehr bis 13 oder weniger zugegeben wird; einen Schritt, in dem das Sojabohnenprotein nach der Hydrolyse getrocknet wird; und einen Schritt, in dem das Sojabohnenprotein vor dem Trocknen in einem wässrigen System bei 105 bis 180°C für 15 bis 180 Sekunden erwärmt wird, wobei das Sojabohnenprotein so hydrolysiert wird, dass der Gehalt an freier Aminosäure weniger als 0,1 Gew.% pro Feststoffgehalt des Sojabohnenproteinmaterials beträgt.

2. Verfahren zur Herstellung eines Sojabohnenproteinmaterials gemäss Anspruch 1, wobei der Emulgator einer oder mehrere, ausgewählt aus der Gruppe bestehend aus Zuckerester, einem Sorbitan-Fettsäureester, Polyglycerinester und einem Monoglycerid einer organischen Säure, ist.

3. Verfahren zur Herstellung eines Sojabohnenproteinmaterials gemäss Anspruch 1, wobei ferner eines oder mehrere, ausgewählt aus der Gruppe bestehend aus Magnesiumsalz, Magnesiumhydroxid, Magnesiumoxid, Calciumsalz, Calciumhydroxid und Calciumoxid, zu dem Sojabohnenprotein zugegeben wird/werden.

## Revendications

1. Procédé de production d'une matière protéique de soja, comprenant : une étape d'hydrolyse d'une protéine de soja à l'aide d'une protéase dans un système aqueux jusqu'à obtention d'une solubilité de l'acide trichloroacétique (TCA) à 0,22 M de 15 à 30 % ; une étape d'ajout d'un émulsifiant ayant une valeur HBL de 6 ou plus à 13 ou moins ; une étape de séchage de la protéine de soja après l'hydrolyse ; et une étape de chauffage de la protéine de soja dans un système aqueux à 105-180°C pendant 15 à 180 secondes avant le séchage, la protéine de soja étant hydrolysée de façon que sa teneur en acides aminés libres soit inférieure à 0,1 % en poids par rapport à la teneur en fractions solides de la matière protéique de soja.

2. Procédé de production d'une matière protéique de soja selon la revendication 1, dans lequel l'émulsifiant est un ou plusieurs émulsifiants choisis dans le groupe constitué par un ester de sucre, un ester d'acide gras de sorbitan, un ester de polyglycérine, et un monoglycéride d'acide organique.

3. Procédé de production d'une matière protéique de soja selon la revendication 1, dans lequel un ou plusieurs composés choisis dans le groupe constitué par le sel de magnésium, l'hydroxyde de magnésium, l'oxyde de magnésium, le sel de calcium, l'hydroxyde de calcium, et l'oxyde de calcium sont en outre ajoutés à la protéine de soja.
